# EUROPEAN PATENT APPLICATION

(11) **EP 4 481 676 A1**
(43) Date of publication of application: **25.12.2024**
(21) Application number: 22927132.5
(22) Date of filing: 18.02.2022
(51) Int. Cl.: G06T 7/00

(54) **DETERMINATION DEVICE, DETERMINATION SYSTEM, DETERMINATION METHOD, PROGRAM, AND RECORDING MEDIUM**

(71) Applicant: Kabushiki Kaisha Toshiba, Tokyo 105-0023 (JP)
(72) Inventor: HIROSE, Yusuke, Tokyo 105-0023 (JP); MANABE, Takahiro, Tokyo 105-0023 (JP); SATO, Hidenori, Tokyo 105-0023 (JP)
(74) Representative: Hoffmann Eitle
(86) International application number: PCT/JP2022/006652
(87) International publication number: WO 2023/157231

(57) **Abstract**

A determination device (10) according to an embodiment determines a goodness of an article (A) in an image including multiple pixel units; and the determination is based on respectively comparing multiple thresholds and pixel values of the multiple pixel units. The determination device (10) performs first processing (S11) of setting the multiple thresholds respectively to initial values. The determination device (10) further performs second processing (S12) of determining a goodness of an article (A) in at least a portion of multiple good-part images based on the multiple thresholds. The determination device (10) further performs third processing (S14) of relaxing at least a portion of the multiple thresholds when the article (A) in not less than one of the multiple good-part images is determined to be defective. The determination device (10) adjusts the multiple thresholds by repeating the second processing (S12) and the third processing (S14) until the article (A) is determined to be good for each of the multiple good-part images in the second processing (S12).

## Description

### [Technical Field]

Embodiments of the invention relate to a determination device, a determination system, a determination method, a program, and a recording medium.

### [Background Art]

There is technology that determines the goodness of an article in an image. It is desirable to increase the determination accuracy of such technology.

### [Prior Art Documents]

### [Patent Literature]

Patent Literature 1: JP-A 2013-224833 (Kokai)

### [Summary of Invention]

### [Problem to be Solved by the Invention]

A problem to be solved by the invention is to provide a determination device, a determination system, a determination method, a program, and a recording medium that can increase the determination accuracy.

### [Means for Solving the Problem]

A determination device according to an embodiment determines a goodness of an article in an image including multiple pixel units; and the determination is based on respectively comparing multiple thresholds and pixel values of the multiple pixel units. The determination device performs first processing of setting the multiple thresholds respectively to initial values. The determination device further performs second processing of determining a goodness of an article in at least a portion of multiple good-part images based on the multiple thresholds. The determination device further performs third processing of relaxing at least a portion of the multiple thresholds when the article in not less than one of the multiple good-part images is determined to be defective. The determination device adjusts the multiple thresholds by repeating the second processing and the third processing until the article is determined to be good for each of the multiple good-part images in the second processing.

### [Brief Description of Drawings]

[FIG. 1]

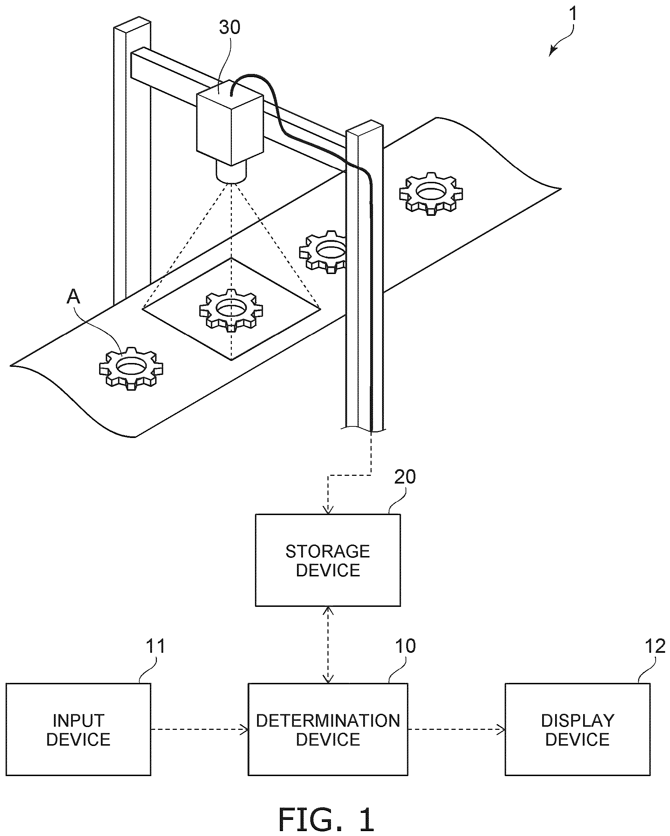

   FIG. 1 is a schematic view illustrating a configuration of a determination system according to an embodiment.
[FIG. 2]

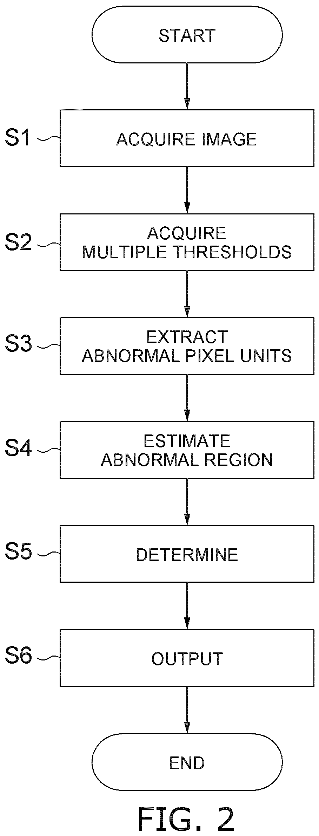

   FIG. 2 is a flowchart illustrating inspection processing according to a determination device according to the embodiment.
[FIG. 3]

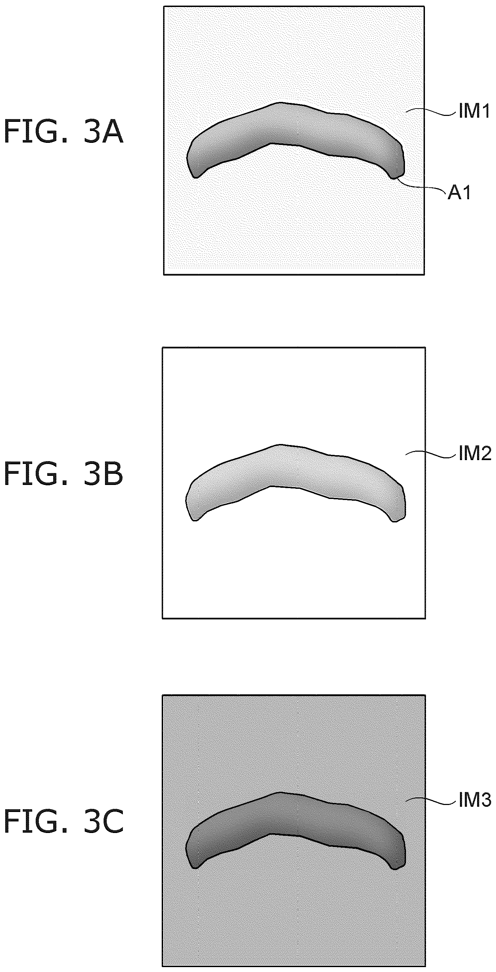

   FIGS. 3A to 3C are images for describing the inspection processing.
[FIG. 4]

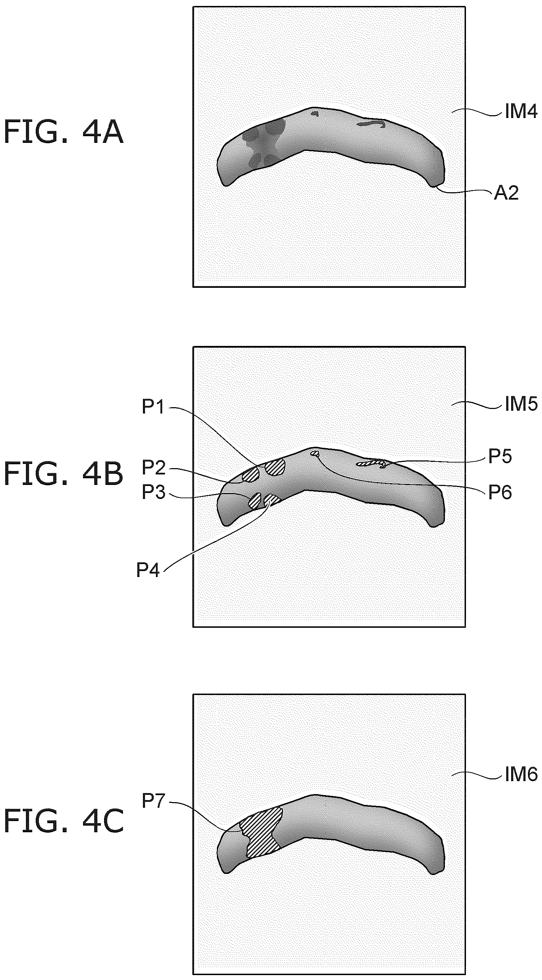

   FIGS. 4A to 4C are images for describing the inspection processing.
[FIG. 5]

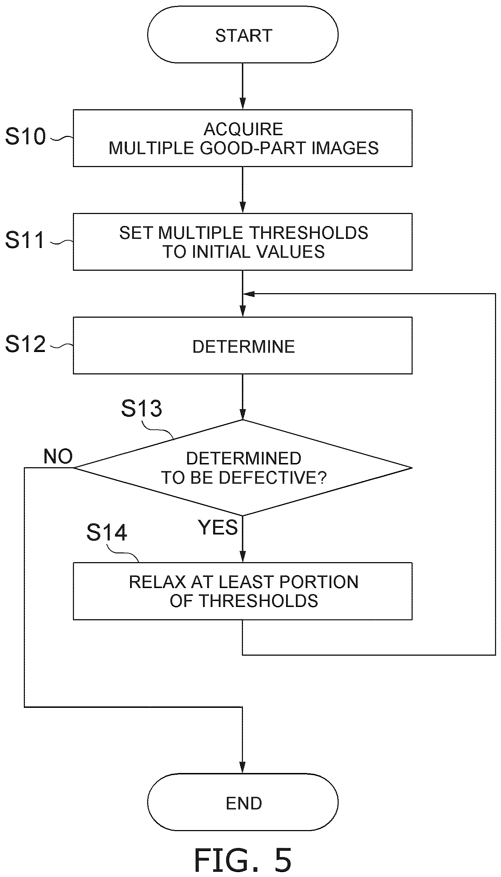

   FIG. 5 is a flowchart illustrating a method for adjusting thresholds according to the determination device according to the embodiment.
[FIG. 6]

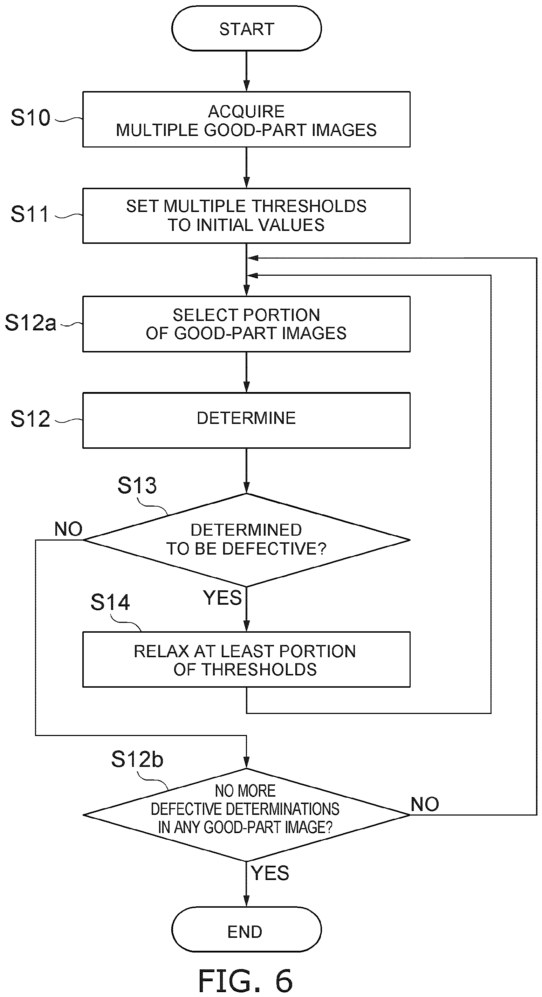

   FIG. 6 is a flowchart illustrating another adjustment method according to the determination device according to the embodiment.
[FIG. 7]

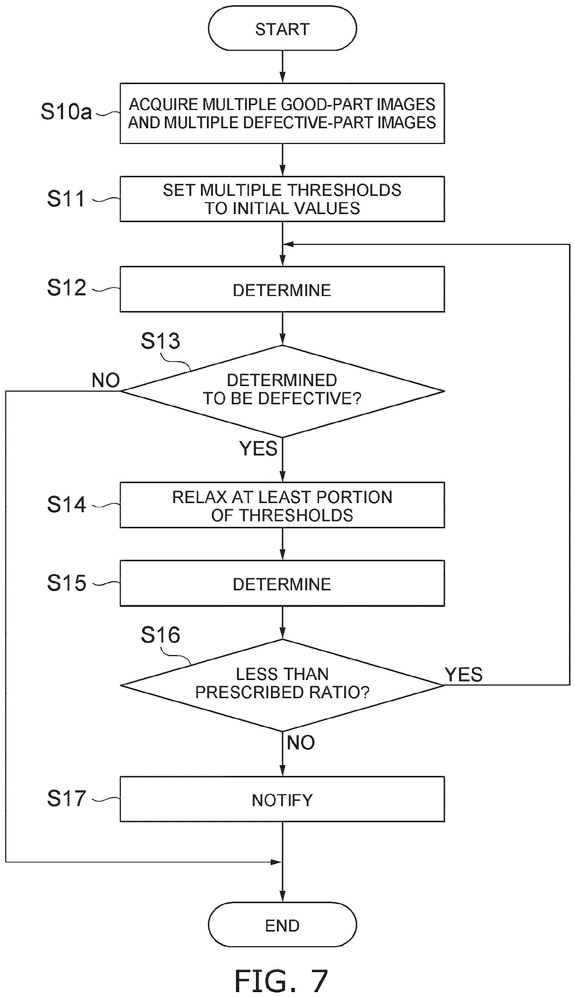

   FIG. 7 is a flowchart illustrating another adjustment method according to the determination device according to the embodiment.
[FIG. 8]

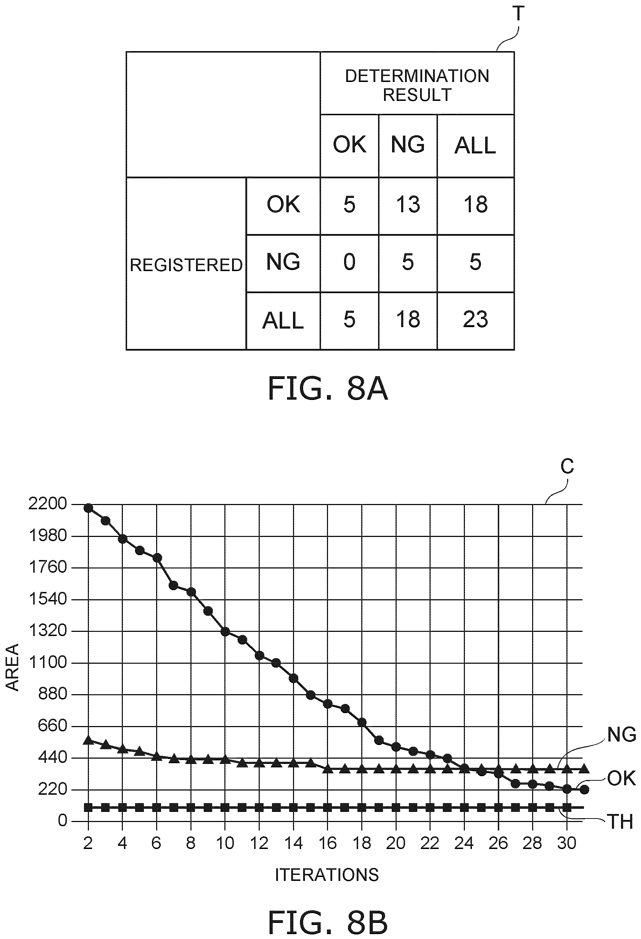

   FIGS. 8A and 8B are schematic views illustrating an output example from the determination device according to the embodiment.
[FIG. 9]

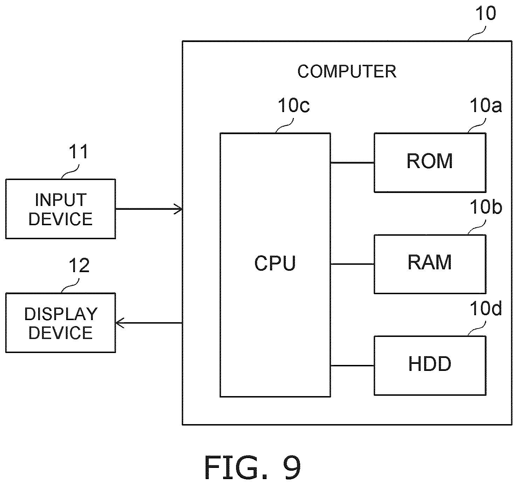

   FIG. 9 is a schematic view illustrating a hardware configuration.

### [Detailed Description]

Embodiments of the invention will now be described with reference to the drawings. In the specification and drawings, components similar to those already described are marked with the same reference numerals; and a detailed description is omitted as appropriate.

FIG. 1 is a schematic view illustrating a configuration of a determination system according to an embodiment.

As illustrated in FIG. 1, the determination system 1 according to the embodiment includes a determination device 10, an input device 11, a display device 12, a storage device 20, and an imaging device 30. The determination system 1 according to the embodiment can be used in a visual inspection of an article.

The imaging device 30 acquires an image by imaging an article A that is the inspection object. The imaging device 30 stores the acquired image in the storage device 20. The imaging device 30 acquires a still image of the article A. The imaging device 30 may acquire a video image and cut out a still image from the video image. The imaging orientation of the article A is appropriately set to obtain an image suited to the inspection. For example, multiple articles A are sequentially fed by a feeding apparatus 40. The imaging device 30 is fixed and sequentially images the multiple articles A that are fed.

The determination device 10 acquires an image stored in the storage device 20. Or, the image may be directly transmitted from the imaging device 30 to the determination device 10. The determination device 10 determines the goodness of the article A in the image. The user uses the input device 11 to input data to the determination device 10. The display device 12 displays the data output from the determination device 10 so that the user can visually check the data.

FIG. 2 is a flowchart illustrating inspection processing according to the determination device according to the embodiment.

The determination device 10 acquires an image by accessing the storage device 20 (step S1). One image includes multiple pixel units arranged in an X-direction and a Y-direction. For example, the pixel unit includes one pixel. Or, the pixel unit may include two or more pixels that are adjacent to each other.

The determination device 10 acquires multiple thresholds by accessing the storage device 20 (step S2). The multiple thresholds are used respectively to determine whether or not the multiple pixel units are normal. One threshold is set for one pixel unit. Specifically, an upper limit and a lower limit of the pixel value are set as the threshold. Generally, the pixel value is an integer from 0 to 255. Integers from 0 to 255 are set as the upper limit and the lower limit. When the pixel value is between the lower limit and the upper limit, the pixel unit that has the pixel value is determined to be normal. When the pixel value deviates from the range between the lower limit and the upper limit, the pixel unit that has the pixel value is determined to be abnormal.

When one pixel unit includes one pixel, the pixel value of the one pixel can be used as the pixel value of the one pixel unit. When one pixel unit includes two or more pixels, the average of the pixel values of the two or more pixels can be used as the pixel value of the one pixel unit.

The determination device 10 compares the multiple pixel values of the image with the multiple thresholds and extracts abnormal pixel units (first abnormal pixel units) that deviate from the threshold (step S3). The determination device 10 estimates an abnormal region (a first abnormal region) based on the extracted abnormal pixel units (step S4). For example, noise removal, dilation, erosion, and labeling are performed to estimate the abnormal region. Such processing generates and allows the identification of a particle (a particle) of the abnormal pixel units. The determination device 10 estimates that the particle of the abnormal pixel units is an abnormal region.

The determination device 10 determines the goodness of the article in the image based on a feature of the abnormal region (step S5). At least one selected from the area of the abnormal region, the shape of the abnormal region, and the distribution of the pixel values in the abnormal region is used as the feature.

When area is used as the feature, the threshold of the area is preset. The area is represented by the number of pixels included in the abnormal region. The determination device 10 determines that the article is defective when the area of the abnormal region is greater than the threshold.

For example, the aspect ratio is used as the shape. The aspect ratio is the ratio of the major-axis direction length to the minor-axis direction length. The major-axis direction is a direction parallel to the longest line segment among the line segments obtained by connecting any two points on the particle outer edge. The minor-axis direction is perpendicular to the major-axis direction. When the shape is used as the feature, the threshold for the aspect ratio is preset. The magnitude relationship of the aspect ratio and the threshold is set according to the article. For example, when there is a tendency for the aspect ratio of the abnormal region to increase when the quality of the article that is the inspection object is poor, the determination device 10 determines the article to be defective when the aspect ratio is greater than the threshold.

For example, the ratio (a first ratio) of the number of pixel units that is less than the lower limit threshold to the number of pixel units of the abnormal region, the ratio (a second ratio) of the number of pixel units that is greater than the upper limit threshold to the number of pixel units of the abnormal region, etc., are used as the distribution. When the distribution is used as the feature, a first threshold for the first ratio and a second threshold for the second ratio are preset. The determination device 10 determines the article to be defective when the first ratio is greater than the first threshold or when the second ratio is greater than the second threshold.

The determination device 10 outputs the determination result (step S6). For example, the determination device 10 stores the determination result in the storage device 20. The image that is used in the determination may be associated with the determination result and stored in the storage device 20 by the determination device 10. The extracted abnormal pixel unit or the estimated abnormal region may be shown in the image. The determination device 10 may cause the display device 12 to display the determination result and the image.

FIGS. 3A to 3C and FIGS. 4A to 4C are images for describing the inspection processing.

Here, the case is described where one pixel unit includes one pixel. FIG. 3A illustrates an image IM1 obtained by imaging an article A1. FIGS. 3B and 3C are images illustrating thresholds of the pixels that are set for the inspection. Specifically, an image IM2 illustrated in FIG. 3B illustrates the upper limit of the threshold of each pixel. An image IM3 illustrated in FIG. 3C illustrates the lower limit of the threshold of each pixel. When any pixel in the image IM1 is brighter than the pixel at the same coordinate in the image IM2 or darker than the pixel at the same coordinate in the image IM3, the pixel in the image IM1 is determined to be abnormal. In the example, the article A1 that is in the image IM1 is determined to be good.

FIG. 4A illustrates an image IM4 obtained by imaging an article A2. A portion of the article A2 is blackish compared to the article A1. The determination device 10 uses the multiple thresholds to extract the abnormal pixels from the multiple pixels. An image IM5 illustrated in FIG. 4B illustrates extracted abnormal pixels. In the example of FIG. 4B, particles P1 to P6 of the abnormal pixels are extracted.

The determination device 10 estimates the abnormal region based on the particles P1 to P6. For example, particles P5 and P6 are caused to disappear by noise removal and erosion. The particles P1 to P4 are caused to merge with each other by dilation. An image IM6 illustrated in FIG. 4C is obtained thereby. The image IM6 illustrates a particle P7 that includes abnormal pixels. The determination device 10 estimates the particle P7 to be an abnormal region. The determination device 10 determines the goodness of the article A2 based on a feature of the estimated abnormal region.

To determine the goodness of the article in the image with high accuracy, it is favorable to appropriately set the multiple thresholds.

FIG. 5 is a flowchart illustrating a method for adjusting the threshold according to the determination device according to the embodiment.

First, the determination device 10 acquires multiple good-part images (step S10). The multiple good-part images are prepared by the user. A good-part image is an image recognized by the user to be an article having good quality. The determination device 10 sets the multiple thresholds to initial values (step S11; first processing). At this time, stringent values are set as the thresholds. Specifically, the multiple thresholds are set so that the article in at least one good-part image is determined to be defective in the determination of the goodness of the article based on the multiple thresholds. The multiple thresholds may be set so that all of the articles in the multiple good-part images are determined to be defective.

The determination device 10 uses the multiple thresholds to determine the goodness of the article in the good-part image (step S12). Step S12 is an example of second processing or first determination processing. In the determination, the processing of the flowchart illustrated in FIG. 2 is performed. For convenience of description hereinafter, a good-part image of an article that is determined to be defective also is referred to as a good-part image determined to be defective. A good-part image of an article that is determined to be good also is referred to as a good-part image determined to be good. The determination device 10 determines whether or not there is a good-part image determined to be defective in the determination for the good-part images (step S13). In step S12 of the first time, at least one good-part image is determined to be defective because the thresholds are set to be stringent.

When there is a good-part image determined to be defective, the determination device 10 relaxes at least a portion of the thresholds (step S14). Step S14 is an example of third processing or relaxation processing. The relaxation of the thresholds makes it difficult for the article in the good-part image to be determined to be defective. Specifically, in the relaxation of the thresholds, one or two selected from increasing the upper limit and reducing the lower limit are performed. When at least a portion of the thresholds has been relaxed, the determination device 10 re-performs step S12.

Steps S12 to S14 are repeated until all of the good-part images are determined to be good in step S12. The determination device 10 ends the processing when there are no good-part images determined to be defective in step S13. The adjustment of the multiple thresholds ends.

Thereafter, the inspection processing is performed using the adjusted multiple thresholds. In the inspection, the processing of the flowchart illustrated in FIG. 2 is performed for the inspection image of the article that is the inspection object. The goodness of the article of the inspection image is determined thereby. For example, the articles that are determined to be good pass the inspection. The articles that are determined to be defective fail the inspection.

Advantages of the embodiment will now be described.

For example, conventionally, the threshold is set based on the average value and the dispersion. According to this method, the thresholds can be easily set while increasing the accuracy of the determination. On the other hand, when this method is used, all of the prepared good-part images are not always determined to be good. Therefore, in the actual inspection, there is a possibility that a portion of the good parts may be falsely determined to be defective.

To address the problem described above, there is a method in which the image of a good part is used to readjust the thresholds when the good part is falsely determined to be defective. For example, in the readjustment, the image of the good part is added to the good-part images prepared beforehand; and the average value and the dispersion are newly calculated. The thresholds are set based on the new average value and dispersion. When, however, the thresholds are readjusted by adding one image, the effect on the thresholds is small. In particular, when the inspection is continuously performed and the number of good-part images used to set the thresholds becomes high, the effect of one image on the thresholds is small. It is therefore not easy in practice to readjust the thresholds to resolve misdetections when the misdetections occur.

For these problems, according to the embodiment, the determination device 10 adjusts the thresholds by repeating the determination and the relaxation of the thresholds until each good-part image is determined to be good. According to the embodiment, the multiple thresholds are set so that all of the good-part images are determined to be good. As a result, the likelihood of a good part being falsely determined to be defective in the actual inspection can be reduced.

Also, according to the embodiment, in the determination based on the multiple thresholds respectively set to the initial values, the article in at least one of the multiple good-part images is determined to be defective. In other words, the initial values are set to be stringent so that even for a good-part image, the article in the good-part image is determined to be defective. At least a portion of the thresholds is relaxed from the initial values until each of the good-part images is determined to be good. According to the embodiment, the thresholds can be prevented from being too lax. As a result, the likelihood of a defective part being falsely determined to be good in the actual inspection can be reduced.

According to the embodiment, the multiple thresholds can be more appropriately adjusted, and the determination accuracy of the goodness of the article in the image can be increased.

The processing according to the determination device 10 will now be described in detail.

The initial values of the thresholds may be preset fixed values or may be set based on an average value and a dispersion. The average value is calculated by averaging the pixel values positioned at the same coordinate in multiple good-part images. The standard deviation, the variance, the average deviation, etc., of the pixel values at the same coordinate in the multiple good-part images can be used as the dispersion. Stringent initial values are set by setting the dispersion to be small. For example, when the average value µ and the standard deviation σ are used, (*µ* - 3*σ*) and (*µ* + 3*σ*) are typically set as the threshold. In contrast, according to the embodiment, (*µ* - *σ*) and (*µ* + *σ*) are set as the threshold. Compared to when the initial values are fixed, the number of repetitions of steps S12 to S14 necessary for subsequently adjusting the threshold can be reduced by using the average value and the dispersion to set the initial values.

Multiple defective-part images may be used to set the initial values. After setting the multiple thresholds respectively to the initial values, the determination device 10 determines the goodness of the articles in the multiple defective-part images. The determination device 10 approves the initial values that are set when all of the defective-part images are determined to be defective. When any one defective-part image is determined to be good, the determination device 10 narrows all of the thresholds by a preset amount. In other words, the determination device 10 reduces the upper limit of the pixel value by a preset amount, or increases the lower limit of the pixel value by a preset amount. The determination device 10 may narrow only the thresholds of the pixel units not determined to be abnormal.

In step S12, good-part images that are already determined to be good in a previous repeated processing may excluded from the determination by the determination device 10. A good-part image that is determined to be good even once will be similarly determined to be good in all subsequent determination processing. By excluding the good-part image determined to be good from the determination, the calculation amount necessary for repeating steps S12 to S14 can be reduced.

FIG. 6 is a flowchart illustrating another adjustment method according to the determination device according to the embodiment.

In one step S12, the determination device 10 may determine the goodness of all of the good-part images that are prepared, or may determine the goodness of only a portion of the good-part images. For example, after step S11 as illustrated in FIG. 6, the determination device 10 deliberately or randomly selects a preset number of good-part images from the multiple good-part images (step S12a). The determination device 10 performs step S12 for the selected good-part images. The determination device 10 performs step S14 when a good-part image is determined to be defective in step S12. When all of the good-part images selected in step S12 are determined to be good, the determination device 10 determines whether or not all of the good-part images that are prepared have been selected (step S12b). When there is a good-part image that is still not selected, the determination device 10 re-performs step S12a. At this time, the determination device 10 excludes the good-part images once determined to be good from the selection.

When the goodness is determined for only a portion of the good-part images in one step S12, the calculation amount necessary for adjusting the thresholds can be reduced. On the other hand, there is a possibility that a portion of the thresholds may be relaxed more than necessary when performing step S14 based on only the determination results of a portion of the good-part images.

As an example, a first good-part image that has relatively few abnormal pixel units is selected in the initial step S12a. In step S12, the first good-part image is determined to be defective. Based on the first good-part image, step S14 is performed, and a small number of thresholds are relaxed. Subsequently, in step S12b, a second good-part image that has relatively many abnormal pixel units is selected. In step S12, the second good-part image is determined to be defective. Step S14 is performed based on the second good-part image; and many thresholds are relaxed. In the example, many thresholds are relaxed after relaxing a small number of thresholds.

In contrast, if all of the good-part images are selected and many thresholds are relaxed based on the second good-part image, there is a possibility that the relaxation of the small number of thresholds may not be performed. Therefore, to increase the determination accuracy by suppressing the excessive relaxation of the thresholds, it is favorable to determine the goodness for all of the good-part images in one step S12 and to adjust the thresholds based on the determination results.

For example, when relaxing the thresholds, the determination device 10 extracts all of the abnormal pixel units from the good-part images determined to be defective in step S12 and relaxes the thresholds for the abnormal pixel units. Specifically, when the number of good-part images determined to be defective is not less than two, the determination device 10 acquires a union of the abnormal pixel units of the good-part images. The determination device 10 relaxes the thresholds for the abnormal pixel units included in the union. According to this method, the thresholds can be efficiently relaxed, and the calculation amount necessary for adjusting the thresholds can be reduced.

When relaxing the thresholds, the determination device 10 may select a portion of the good-part images from the good-part images determined to be defective in step S12 based on the abnormal region. The determination device 10 relaxes the thresholds for the abnormal pixel units of the selected good-part image. As an example, the determination device 10 selects the good-part image of which the area of the abnormal region is greatest. The determination device 10 relaxes the thresholds for the abnormal pixel units of the selected good-part image. According to this method, the thresholds can be prevented from being relaxed more than necessary, and the determination accuracy of the goodness can be increased.

The pixel units for which the thresholds can be relaxed may be pre-limited by the user. In step S14, the determination device 10 relaxes the thresholds for the pixel units that are not limited. The limit of the relaxation may be set for at least a portion of the thresholds. For example, a limit of the upper limit of the threshold or a limit of the lower limit of the threshold is set. The thresholds that reach the limit in step S14 are not relaxed. By setting a limit for the pixel unit or threshold, the determination can be prevented from being too lax for the pixel unit for which a stringent determination of the presence or absence of an abnormality is desirable.

For example, the magnitude of the relaxed threshold is preset by the user. When relaxing the thresholds, the determination device 10 adds the setting value set by the user to the upper limit of the pixel value and reduces the setting value from the lower limit of the pixel value. As a result, the thresholds are relaxed by increasing the range between the lower limit and the upper limit.

The magnitude of the relaxed threshold may be determined based on one or two selected from the pixel value of the corresponding pixel unit and the area of the set of pixel units for which the thresholds are relaxed. For example, the threshold is relaxed more as the difference between the pixel value and the threshold increases. The threshold is relaxed more as the area of the set of pixel units for which the thresholds are relaxed increases. The time that is necessary for the adjustment of the multiple thresholds can be reduced thereby.

FIG. 7 is a flowchart illustrating another adjustment method according to the determination device according to the embodiment.

The determination device 10 may determine whether or not the multiple thresholds are appropriate by using defective-part images. Specifically, as illustrated in FIG. 7, the determination device 10 acquires multiple good-part images and multiple defective-part images (step S10a). The multiple defective-part images are prepared by the user. The defective-part images are images that are confirmed by the user to include articles of which the quality is not good.

Subsequently, the determination device 10 performs steps S12 to 14. After step S14, the determination device 10 uses the multiple thresholds to determine the goodness of the articles in the defective images (step S15). Step S15 is an example of fourth processing or second determination processing. The determination device 10 determines whether or not the ratio of the number of defective-part images determined to be good to the number of defective-part images that are prepared is less than a prescribed ratio (step S16). The prescribed ratio may be set to be zero. In other words, the ratio is not less than the prescribed ratio when even one defective-part image is determined to be good.

The goodness of the article in the defective-part image is determined similarly to the goodness of the article in the good-part image. Specifically, the determination device 10 compares the multiple pixel values of the defective-part image to the multiple thresholds and extracts the abnormal pixel units (second abnormal pixel units) that deviate from the thresholds. The determination device 10 estimates an abnormal region (a second abnormal region) based on the extracted abnormal pixel units. The determination device 10 determines the goodness of the article in the defective-part image based on a feature of the abnormal region.

The determination device 10 suspends the repeated processing when the article is determined to be good for not less than the prescribed ratio of the multiple defective-part images (step S17). The determination device 10 may notify the user of the suspension of the repeated processing. For example, the determination device 10 notifies the user by a display in the display device 12, transmitting data to a specific terminal device, etc.

The determination of a defective-part image to be good means that at least a portion of the thresholds is too relaxed. If such thresholds are used in an actual inspection, there is a possibility that a defective part may be falsely determined as a good part. Useless calculations can be avoided by suspending the repeated processing.

The determination device 10 can prompt the attention of the user by notifying the user. Examples of causes of the thresholds being too relaxed include a defective-part image being mixed in the good-part images prepared by the user. By the notification, the user can be prompted to check for a defect in the method for adjusting the thresholds.

In the flowchart illustrated in FIG. 7, step S15 may be performed before step S14. For example, step S15 may be simultaneously performed with step S12. When step S15 is simultaneously performed with step S12, step S16 may be performed after steps S12 and S15 and before step S13.

FIGS. 8A and 8B are schematic views illustrating an output example from the determination device according to the embodiment.

For example, the determination device 10 displays a table T illustrated in FIG. 8A and a chart C illustrated in FIG. 8B. In the table T, the rows illustrate the number of good (OK) images and the number of defective (NG) images prepared beforehand. The columns illustrate the number of images determined to be good and the number of images determined to be defective. In the example, eighteen good-part images are prepared, and five defective-part images are prepared. In the determination, five images are determined to be good; and eighteen images are determined to be defective. Because the number of images determined to be defective is greater than the actual number of defective-part images, it can be seen that a portion of the thresholds is still stringent.

In the chart C, the horizontal axis is the number of repetitions of steps S12 to S14 of the flowchart illustrated in FIG. 5. The vertical axis is a value indicating a feature of the abnormal region. The OK plot illustrates a first value indicating a feature of the first abnormal region estimated from the good-part image. The NG plot illustrates a second value indicating a feature of the second abnormal region estimated from the defective-part image. The TH plot illustrates a threshold for the first and second values. For example, the area of the abnormal region, the aspect ratio of the abnormal region, a first ratio, or a second ratio can be used as the first and second values.

As described above, the determination device 10 repeatedly performs a processing set including a determination (the first determination processing) of the goodness of the article (a first article) in the good-part image, a determination (the second determination processing) of the goodness of the article (a second article) in the defective-part image, and a relaxation (the relaxation processing) of at least a portion of the thresholds when the first article is determined to be defective. The determination device 10 displays the first value, the second value, and the threshold in the display device 12 each time the processing set is performed.

In the example of FIG. 8B, the value of the vertical axis is the area of the abnormal region. The OK plot illustrates the maximum area of the abnormal region among the abnormal regions estimated in the multiple good-part images. The NG plot illustrates the minimum area of the abnormal region among the abnormal regions estimated in the multiple defective-part images. The TH plot illustrates the threshold for the area of the abnormal region. To determine the defective-part images to be defective while determining the good-part images to be good, it is necessary to adjust the multiple thresholds so that the OK plot falls below the TH plot while the NG plot remains above the TH plot.

It can be seen from FIG. 8B that the area value of the OK plot decreases and approaches the TH plot as the number of repetitions increases. Also, the decrease amount of the OK plot is greater than the decrease amount of the NG plot. This indicates that at least a portion of the thresholds can be relaxed while the defective-part images are still determined to be defective. The table T of FIG. 8A illustrates the information when the thirty-first repeated processing of the chart C of FIG. 8B was completed.

The data illustrated in FIGS. 8A and 8B may be updated in real time as the number of repetitions increases. For example, the determination device 10 stores the chart C and the table T at each number of repetitions in the storage device 20. Or, the determination device 10 may cause the display device 12 to display one or two selected from the chart C and the table T. As a result, the user can easily ascertain how much the adjustment of the thresholds has progressed, and whether or not the adjustment of the thresholds is progressing appropriately.

FIG. 9 is a schematic view illustrating a hardware configuration.

For example, the determination device 10 is a computer and includes read only memory (ROM) 10a, random access memory (RAM) 10b, a central processing unit (CPU) 10c, and a hard disk drive (HDD) 10d.

The ROM 10a stores programs that control the operations of a computer. Programs that are necessary for causing the computer to realize the processing described above are stored in the ROM 10a.

The RAM 10b functions as a memory region into which the programs stored in the ROM 10a are loaded. The CPU 10c includes a processing circuit. The CPU 10c reads control programs stored in the ROM 10a and controls the operations of the computer according to the control programs. Also, the CPU 10c loads various data obtained by the operations of the computer into the RAM 10b. The HDD 10d stores data necessary for the processing of the determination device 10 and/or data obtained by the processing. For example, the HDD 10d may function as the storage device 20 illustrated in FIG. 1.

Instead of the HDD 10d, the determination device 10 may include an embedded MultiMediaCard (eMMC), a solid state drive (SSD), a solid state hybrid drive (SSHD), etc.

The input device 11 includes, for example, at least one selected from a mouse, a keyboard, a microphone (audio input), and a touchpad. The display device 12 includes, for example, at least one selected from a monitor and a projector. A device such as a touch panel that functions as both the input device 11 and the display device 12 may be used.

According to the determination device, the determination system, or the determination method described above, multiple thresholds can be more appropriately set, and the determination accuracy can be increased. Also, similar effects can be obtained by using a program to cause a computer to operate as the determination device.

The processing of the various data described above may be recorded, as a program that can be executed by a computer, in a magnetic disk (a flexible disk, a hard disk, etc.), an optical disk (CD-ROM, CD-R, CD-RW, DVD-ROM, DVD±R, DVD±RW, etc.), semiconductor memory, or another recording medium.

For example, the information that is recorded in the recording medium can be read by a computer (or an embedded system). The recording format (the storage format) of the recording medium is arbitrary. For example, the computer reads the program from the recording medium and causes a CPU to execute the instructions recited in the program based on the program. In the computer, the acquisition (or the reading) of the program may be performed via a network.

While certain embodiments of the inventions have been illustrated, these embodiments have been presented by way of example only, and are not intended to limit the scope of the inventions. These novel embodiments may be embodied in a variety of other forms; and various omissions, substitutions, modifications, etc., can be made without departing from the spirit of the inventions. These embodiments and their modifications are within the scope and spirit of the inventions, and are within the scope of the inventions described in the claims and their equivalents. Also, the embodiments above can be implemented in combination with each other.

## Claims

1. A determination device (10) determining a goodness of an article (A) in an image including a plurality of pixel units, the determination being based on respectively comparing pixel values of the plurality of pixel units and a plurality of thresholds, the determination device (10) performing:
first processing (S11) of setting the plurality of thresholds respectively to initial values;
second processing (S12) of determining a goodness of an article (A) in at least a portion of a plurality of good-part images based on the plurality of thresholds; and
third processing (S14) of relaxing at least a portion of the plurality of thresholds when the article (A) is determined to be defective for not less than one of the plurality of good-part images,
the plurality of thresholds being adjusted by repeating the second processing (S12) and the third processing (S14) until the article (A) is determined to be good for each of the plurality of good-part images in the second processing (S12).

2. The determination device (10) according to claim 1, wherein
the article (A) is determined to be defective for at least one of the plurality of good-part images in a determination based on the plurality of thresholds set respectively to the initial values.

3. The determination device (10) according to claim 1 or 2, wherein
the second processing (S12) includes extracting one or more abnormal pixel units deviating from the threshold among a plurality of the pixel units for each of the at least a portion of the plurality of good-part images, and
the third processing (S14) relaxes at least a portion of one or more of the thresholds for the one or more abnormal pixel units.

4. The determination device (10) according to any one of claims 1 to 3, wherein
the first processing (S11) includes calculating an average value and a dispersion of the pixel values of the plurality of good-part images for each of the pixel units, and setting the initial values based on the average values and the dispersions.

5. The determination device (10) according to any one of claims 1 to 4, wherein
the second processing (S12) includes, for each of the at least a portion of the plurality of good-part images:
extracting an abnormal pixel unit deviating from the threshold among a plurality of the pixel units;
estimating an abnormal region based on the abnormal pixel unit; and
determining the goodness of the article (A) based on a feature of the abnormal region.

6. The determination device (10) according to claim 5, wherein
the third processing (S14) includes:
selecting one of the good-part images in which an area of the abnormal region is greatest; and
relaxing the thresholds for the abnormal pixel units of the one good-part image.

7. The determination device (10) according to claim 5 or 6, wherein
the feature of the abnormal region is at least one selected from an area of the abnormal region, a shape of the abnormal region, and a distribution of the pixel values of the abnormal region.

8. The determination device (10) according to any one of claims 1 to 7, wherein
when repeating the second processing (S12) and the third processing (S14), the second processing (S12) is not performed for the good-part images of which the article (A) is already determined to be good.

9. The determination device (10) according to any one of claims 1 to 8, further performing:
fourth processing of determining goodnesses of articles (A) in a plurality of defective-part images based on the plurality of thresholds,
the second processing (S12), the third processing (S14), and the fourth processing being repeated,
the fourth processing including suspending the repeated processing when the article (A) is determined to be good for not less than a prescribed ratio of the plurality of defective-part images.

10. The determination device (10) according to claim 9, wherein
the first processing (S11) includes setting the initial values respectively for the plurality of thresholds so that the articles (A) in each of the plurality of defective-part images are determined to be defective.

11. The determination device (10) according to any one of claims 1 to 10, further performing:
inspection processing of determining a goodness of an article (A) in an inspection image by using the plurality of thresholds that is adjusted.

12. A determination device (10) determining a goodness of an article (A) in an image by comparing each pixel value with a threshold,
the determination device (10) setting a plurality of the thresholds so that an article (A) in a good-part image is determined to be defective, and then repeating a determination of the good-part image and a relaxation of at least a portion of the plurality of thresholds so that the article (A) in the good-part image is determined to be good.

13. A determination device (10) determining a goodness of an article (A) in an image including a plurality of pixel units based on respectively comparing pixel values of the plurality of pixel units and a plurality of thresholds,
the determination device (10) repeatedly performing, after setting the plurality of thresholds respectively to initial values, a processing set including:
first determination processing of using the plurality of thresholds to estimate a first abnormal region in a good-part image of a first article (A), and determining a goodness of the first article (A) based on a feature of the first abnormal region;
second determination processing of using the plurality of thresholds to estimate a second abnormal region in a defective-part image of a second article (A), and determining a goodness of the second article (A) based on a feature of the second abnormal region; and
relaxation processing of relaxing at least a portion of the plurality of thresholds when the first article (A) is determined to be defective,
the determination device (10) causing a display device to display a first value indicating the feature of the first abnormal region, a second value indicating the feature of the second abnormal region, and a threshold for the first and second values each time the processing set is performed.

14. The determination device (10) according to claim 13, wherein
the first determination processing includes extracting a first abnormal pixel unit deviating from the threshold among a plurality of pixel units for each of a plurality of the good-part images, and estimating the first abnormal region based on the first abnormal pixel unit,
the second determination processing includes extracting a second abnormal pixel unit deviating from the threshold among a plurality of pixel units for each of a plurality of the defective-part images, and estimating the second abnormal region based on the second abnormal pixel unit,
an area of a maximum first abnormal region among a plurality of the first abnormal regions is used as the first value,
an area of a minimum second abnormal region among a plurality of the second abnormal regions is used as the second value, and
the display device is caused to display the first and second values.

15. A determination system, comprising:
the determination device (10) according to any one of claims 1 to 14; and
an imaging device.

16. A determination method causing a computer (10) to determine a goodness of an article (A) in an image including a plurality of pixel units, the determination being based on respectively comparing pixel values of the plurality of pixel units and a plurality of thresholds,
the determination method causing the computer to perform:
first processing (S11) of setting the plurality of thresholds respectively to initial values;
second processing (S12) of determining a goodness of an article (A) in at least a portion of a plurality of good-part images based on the plurality of thresholds; and
third processing (S14) of relaxing at least a portion of the plurality of thresholds when the article (A) in not less than one of the plurality of good-part images is determined to be defective,
the plurality of thresholds being adjusted by causing the computer to repeat the second processing (S12) and the third processing (S14) until the article (A) is determined to be good for each of the plurality of good-part images in the second processing (S12).

17. A program causing a computer to determine a goodness of an article (A) in an image including a plurality of pixel units based on respectively comparing pixel values of the plurality of pixel units and a plurality of thresholds,
the program causing the computer to perform:
first processing (S11) of setting the plurality of thresholds respectively to initial values;
second processing (S12) of determining a goodness of an article (A) in at least a portion of a plurality of good-part images based on the plurality of thresholds; and
third processing (S14) of relaxing at least a portion of the plurality of thresholds when the article (A) in not less than one of the plurality of good-part images is determined to be defective,
the plurality of thresholds being adjusted by causing the computer to repeat the second processing (S12) and the third processing (S14) until the article (A) is determined to be good for each of the plurality of good-part images in the second processing (S12).

18. A recording medium storing the program according to claim 17.
